(19) Europäisches Patentamt
European Patent Office
Office européen des brevets

(11) **EP 3 622 281 B1**

(12) **EUROPÄISCHE PATENTSCHRIFT**

(45) Veröffentlichungstag und Bekanntmachung des Hinweises auf die Patenterteilung:
**14.06.2023 Patentblatt 2023/24**

(21) Anmeldenummer: **18716922.2**

(22) Anmeldetag: **23.03.2018**

(51) Internationale Patentklassifikation (IPC):
**G01N 27/406** *(2006.01)* **G01N 27/417** *(2006.01)*

(52) Gemeinsame Patentklassifikation (CPC):
**G01N 27/4067; G01N 27/4175**

(86) Internationale Anmeldenummer:
**PCT/EP2018/057459**

(87) Internationale Veröffentlichungsnummer:
**WO 2018/206191 (15.11.2018 Gazette 2018/46)**

(54) **VERFAHREN ZUR BESTIMMUNG DER TEMPERATUR EINES FESTELEKTROLYT-GASSENSORS**

METHOD FOR DETERMINING THE TEMPERATURE OF A SOLID ELECTROLYTE GAS SENSOR

PROCÉDÉ DE DÉTERMINATION DE LA TEMPÉRATURE D'UN CAPTEUR DE GAZ À ÉLECTROLYTE SOLIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.05.2017 DE 102017207802**

(43) Veröffentlichungstag der Anmeldung:
**18.03.2020 Patentblatt 2020/12**

(73) Patentinhaber: **Robert Bosch GmbH
70442 Stuttgart (DE)**

(72) Erfinder:
• **LEDERMANN, Bernhard
71263 Weil Der Stadt (DE)**
• **BAUMANN, Fabian
71563 Affalterbach (DE)**

(56) Entgegenhaltungen:
WO-A1-01/96848 DE-A1-102010 042 013
DE-A1-102014 205 383 DE-A1-102015 207 880
US-A1- 2010 073 017

EP 3 622 281 B1

**Beschreibung**

Stand der Technik

Aus dem Stand der Technik ist eine Vielzahl von Sensoren und Verfahren zur Erfassung mindestens einer Eigenschaft eines Messgases in einem Messgasraum bekannt. Dabei kann es sich grundsätzlich um beliebige physikalische und/oder chemische Eigenschaften des Messgases handeln, wobei eine oder mehrere Eigenschaften erfasst werden können. Die Erfindung wird im Folgenden insbesondere unter Bezugnahme auf eine qualitative und/oder quantitative Erfassung eines Anteils einer Gaskomponente des Messgases beschrieben, insbesondere unter Bezugnahme auf eine Erfassung eines Sauerstoffanteils in dem Messgasteil. Der Sauerstoffanteil kann beispielsweise in Form eines Partialdrucks und/oder in Form eines Prozentsatzes erfasst werden. Alternativ oder zusätzlich sind jedoch auch andere Eigenschaften des Messgases erfassbar

Aus dem Stand der Technik sind insbesondere keramische Sensoren bekannt, welche ein Sensorelement basierend auf der Verwendung von elektrolytischen Eigenschaften bestimmter Festkörper, also auf Ionen-leitenden Eigenschaften dieser Festkörper, umfassen. Insbesondere kann es sich bei diesen Festkörpern um keramische Festelektrolyte handeln, wie beispielsweise Zirkoniumdioxid ($ZrO_2$), insbesondere yttriumstabilisiertes Zirkoniumdioxid (YSZ) und scandiumdotiertes Zirkoniumdioxid (ScSZ), die geringe Zusätze an Aluminiumoxid ($Al_2O_3$) und/oder Siliziumoxid ($SiO_2$) enthalten können.

Beispielsweise können derartige Sensoren als so genannte Lambdasonden oder als Stickoxidsensoren ausgestaltet sein, wie sie beispielsweise aus K. Reif, Deitsche, K-H. et al., Kraftfahrtechnisches Taschenbuch, Springer Vieweg, Wiesbaden, 2014, Seiten 1338 -1347, bekannt sind. Mit Breitband-Lambdasonden, insbesondere mit planaren Breitband-Lambdasonden, kann beispielsweise die Sauerstoffkonzentration im Abgas in einem großen Bereich bestimmt und damit auf das Luft-Kraftstoff-Verhältnis im Brennraum geschlossen werden. Die Luftzahl $\lambda$ (Lambda) beschreibt dieses Luft-Kraftstoff-Verhältnis. Stickoxid-Sensoren bestimmen sowohl die Stickoxid- als auch die Sauerstoffkonzentration im Abgas.

Durch Kombination einer Pumpzelle, der Messzelle, und einer Sauerstoff-Referenzzelle, der Nernst-Zelle, kann ein Sensor zur Messung des Sauerstoffgehalts in einem Umgebungsgas aufgebaut werden. In einer Pumpzelle, die nach dem amperometrischen Pumpprinzip arbeitet, diffundiert bei Anlegen einer Spannung oder eines Stromes an die Pumpelektroden, die sich in unterschiedlichen Gasräumen befinden, ein Sauerstoff-Ionenstrom durch einen keramischen Körper (den sauerstoffleitenden Festelektrolyten) der die Gasräume trennt ("pumpen"). Wird die Pumpzelle dazu genutzt, den Sauerstoff-Partialdruck in einem Hohlraum, in den das Umgebungsgas diffundieren kann, konstant zu halten, dann kann über die Messung des elektrischen Stroms auf die transportierte Menge Sauerstoff geschlossen werden. Dieser Pumpstrom ist, gemäß des Diffusionsgesetzes, direkt proportional zum Sauerstoff-Partialdruck im Umgebungsgas. Mit einer Nernst-Zelle kann das Verhältnis des SauerstoffPartialdrucks in dem Hohlraum zum Sauerstoff-Partialdruck in einem weiteren Referenzgasraum über die sich ausbildende Nernstspannung bestimmt werden.

Bekannte Breitband-Lambdasonden benötigen für verschiedene Funktionalitäten eine Information über eine Temperatur der Keramik des Sensorelements. In der Nähe des Betriebspunktes des Sensors, beispielsweise 780°C, kann die Information über die Temperatur der Keramik über eine temperaturabhängige ohmsche Eigenschaft der Keramik, insbesondere den Innenwiderstand der Nernstzelle, ermittelt werden. Dabei kann ein Sensor einen von den Herstellern spezifizierten Widerstand an der Nernstzelle von 300Ohm aufweisen.

Weiter sind Steuergeräte bekannt, welche eingerichtet sind, den Innenwiderstand zur Temperaturbestimmung des Sensors zu ermitteln. Jedoch umfassen derartige Steuergeräte differentielle und massegebundene Kapazitäten zu einer Stabilisierung verschiedener Sensorsignale, so dass es zu einer Verfälschung der eigentlich ohmschen Messung kommen kann. Bei einer Messanordnung mit einer Stromquelle zur Ausmessung des ohmschen Widerstandes kann eine Einschwingzeit bis zu einem Erreichen eines ohmschen Zielwertes proportional zu diesem und den differentiellen Kapazitäten sein. Dies kann zu einer starken Verfälschung der Widerstandsmessungen hoher Widerstandswerte führen.

Eine Verlängerung von Bestromungszeiten kann bei Breitband-Lambdasonden zu einer starken Polarisierung der pumpenden Elektrode führen. Diese starke Polarisierung kann einerseits zu einer weiteren Verfälschung der Widerstandsmessung führen. Andererseits kann diese Polarisierung sowie der ohmsche Spannungshub an der Nernstzelle bei Ansteuerung mit einer Stromquelle in erster Näherung proportional zu Widerstand und Strom-Amplitude sein, so dass eine Wahrscheinlichkeit von irreversiblen Prozessen an der Keramik erhöht und das Sensorelement auf Dauer geschädigt werden kann. Im Falle von gealterten oder geschädigten Sensoren kann eine Abnahme der Sensorelektrodenkapazität möglich sein, was wiederum zu einer Polarisierung der Elektrode und zu einer zusätzlichen Verfälschung der Widerstandsmessung führen kann.

Aus der DE 10 2014 205 383 A1 ist ein Verfahren zum Betrieb einer Sensorvorrichtung bekannt.

Offenbarung der Erfindung

Es wird daher ein Verfahren zur Bestimmung eines Innenwiderstands eines Sensorelements eines Sensors zur Erfassung mindestens einer Eigenschaft eines Messgases in einem Messgasraum vorgeschlagen, welches die Nachteile bekannter Verfahren zum Betreiben dieser Sensoren zumindest weitgehend vermeidet und bei dem insbesondere ein Einfluss von in ein Steuergerät eingebauten differentiellen Kapazitäten und einer Aufpolarisierung der Sensorelektrode auf eine ohmsche Messung reduziert werden kann.

Die Erfindung ist ein Verfahren zur Bestimmung eines Innenwiderstands eines Sensorelements wie in Anspruch 1 definiert. Der Sensor weist mindestens ein Sensorelement zur Erfassung der Eigenschaft des Messgases auf. Das Sensorelement umfasst mindestens eine erste Elektrode, mindestens eine zweite Elektrode und mindestens einen die erste Elektrode und die zweite Elektrode verbindenden Festelektrolyten. Das Messsystem weist mindestens ein elektronisches Steuergerät auf. Das Verfahren weist die folgenden Schritte auf:

a) Einstellen eines Betriebszustandes, wobei eine Heizspannung an das Sensorelement angelegt wird, und wobei ein im Wesentlichen konstanter Spannungszustand an dem Sensorelement eingestellt und erfasst wird;
b) Durchführen mindestens einer Diagnosesequenz, wobei mindestens ein erster Diagnosezustand durch Beaufschlagen des Sensorelements mit einem Diagnosestrom eingestellt wird, wobei mindestens ein zweiter Diagnosezustand eingestellt wird, in welchem der Diagnosestrom abgeschaltet wird, wobei in dem ersten Diagnosezustand mindestens ein erster Spannungswert erfasst wird und in dem zweiten Diagnosezustand mindestens ein zweiter Spannungswert erfasst wird;
c) Bestimmen einer Information über die Temperatur aus dem ersten Spannungswert und dem zweiten Spannungswert, sowie dem konstanten Spannungszustand des Betriebszustandes.

Die Verfahrensschritte können in der angegebenen Reihenfolge durchgeführt werden. Weiterhin können einer oder mehrere oder alle Verfahrensschritte auch wiederholt durchgeführt werden. Weiterhin können zwei oder mehrere der Verfahrensschritte auch ganz oder teilweise zeitlich überlappend oder gleichzeitig durchgeführt werden. Das Verfahren kann, zusätzlich zu den genannten Verfahrensschritten, auch weitere Verfahrensschritte umfassen. Unter einem Sensor kann grundsätzlich eine beliebige Vorrichtung verstanden werden, welche eingerichtet ist, einen Anteil einer Gaskomponente zu erfassen, insbesondere in einem Gasgemisch, beispielsweise in einem Messgasraum wie beispielsweise einem Abgastrakt einer Brennkraftmaschine. Der Sensor kann beispielsweise ein Breitband-Lambdasensor oder ein NOx-Sensor sein.

Unter einem Sensorelement zur Erfassung mindestens eines Anteils einer Gaskomponente in einem Gas kann ein Element verstanden werden, welches, beispielsweise als Bestandteil der Sensorvorrichtung, eingerichtet ist oder dazu beitragen kann, einen Anteil einer Gaskomponente eines Gases zu detektieren. Hinsichtlich möglicher Ausgestaltungen des Sensorelements kann grundsätzlich auf den oben genannten Stand der Technik verwiesen werden. Das Sensorelement kann insbesondere ein keramisches Sensorelement sein, insbesondere ein keramisches Sensorelement mit einem Schichtaufbau. Insbesondere kann das Sensorelement ein planares keramisches Sensorelement sein. Unter einer Erfassung mindestens eines Anteils einer Gaskomponente kann eine qualitative und/oder quantitative Erfassung einer Gaskomponente des Gases verstanden werden. Grundsätzlich kann das Sensorelement jedoch eingerichtet sein, eine beliebige physikalische und/oder chemische Eigenschaft des Gases zu erfassen, beispielsweise eine Temperatur und/oder ein Druck des Gases und/oder Partikel in dem Gas. Auch andere Eigenschaften sind grundsätzlich erfassbar. Das Gas kann grundsätzlich ein beliebiges Gas sein, beispielsweise Abgas, Luft, ein Luft-Kraftstoff-Gemisch oder auch ein anderes Gas. Die Erfindung ist insbesondere im Bereich der Kraftfahrzeugtechnik einsetzbar, so dass es sich bei dem Gas insbesondere um ein Luft-Kraftstoff-Gemisch handeln kann. Allgemein kann unter einem Messgasraum ein Raum verstanden werden, in welchem sich das zu erfassende Gas befindet. Die Erfindung kann insbesondere im Bereich der Kraftfahrzeugtechnik einsetzbar sein, so dass es sich bei dem Messgasraum insbesondere um einen Abgastrakt einer Brennkraftmaschine handeln kann. Auch andere Anwendungen sind jedoch denkbar.

Unter einer Elektrode ist im Rahmen der vorliegenden Erfindung allgemein ein Element zu verstehen, welches in der Lage ist, den Festelektrolyten derart zu kontaktieren, dass durch den Festelektrolyten und die Elektrode ein Strom aufrechterhalten werden kann. Dementsprechend kann die Elektrode ein Element umfassen, an welchem die Ionen in den Festelektrolyten eingebaut und/oder aus dem Festelektrolyten ausgebaut werden können. Typischerweise umfassen die Elektroden eine Edelmetallelektrode, welche beispielsweise als Metall-Keramik-Elektrode auf dem Festelektrolyten aufgebracht sein kann oder auf andere Weise mit dem Festelektrolyten in Verbindung stehen kann. Typische Elektrodenmaterialien sind Platin-Cermet-Elektroden. Auch andere Edelmetalle, wie beispielsweise Gold oder Palladium, sind jedoch grundsätzlich einsetzbar. Die Bezeichnung "erste" und "zweite", sowie "dritte" und "vierte" Elektrode werden als reine Bezeichnungen verwendet und geben insbesondere keine Auskunft über eine Reihenfolge und/oder darüber, ob beispielsweise noch weitere Elektroden vorhanden sind.

Die erste Elektrode kann mit Gas aus dem Messgasraum beaufschlagbar sein. Insbesondere kann die erste Elektrode zumindest teilweise mit dem Messgasraum verbunden sein, beispielsweise kann die erste Elektrode direkt dem Gas des Messgasraums ausgesetzt sein und/oder durch eine gasdurchlässige poröse Schutzschicht mit Gas aus dem Messgasraum beaufschlagbar sein. Das Sensorelement kann mindestens eine Pumpzelle aufweisen. Beispielsweise kann die erste Elektrode als eine äußere Pumpelektrode ausgestaltet sein.

Die zweite Elektrode kann in mindestens einem Messhohlraum angeordnet sein. Beispielsweise kann die zweite Elektrode als eine innere Pumpelektrode ausgestaltet sein. Unter einem Messhohlraum kann ein Hohlraum innerhalb des Sensorelements verstanden werden, welcher eingerichtet sein kann, einen Vorrat einer Gaskomponente des Gases aufzunehmen. Der Messhohlraum kann ganz oder teilweise offen ausgestaltet sein. Weiter kann der Messhohlraum ganz oder teilweise gefüllt sein, beispielsweise mit einem porösen Medium, beispielsweise mit porösem Aluminiumoxid.

Der Messhohlraum kann über mindestens eine Diffusionsbarriere mit Gas aus dem Messgasraum beaufschlagbar sein. Unter einer Diffusionsbarriere kann eine Schicht aus einem Material verstanden werden, welches eine Diffusion eines Gases und/oder Fluides und/oder Ionen fördert, aber eine Strömung des Gases und/oder Fluides unterdrückt. Die Diffusionsbarriere kann insbesondere eine poröse keramische Struktur mit gezielt eingestellten Porenradien aufweisen. Die Diffusionsbarriere kann einen Diffusionswiderstand aufweisen, wobei unter dem Diffusionswiderstand der Widerstand zu verstehen ist, welchen die Diffusionsbarriere einem Diffusionstransport entgegensetzt.

Die erste Elektrode und die zweite Elektrode sind über mindestens einen Festelektrolyten verbunden und bilden eine Pumpzelle. Durch Anlegen einer Spannung, insbesondere einer Pumpspannung, an die erste und die zweite Elektrode kann Sauerstoff durch die Diffusionsbarriere hindurch aus dem Gas in den Messhohlraum hinein- oder herausgepumpt werden.

Unter einem Festelektrolyten ist im Rahmen der vorliegenden Erfindung ein Körper oder Gegenstand mit elektrolytischen Eigenschaften, also mit Ionen-leitenden Eigenschaften, zu verstehen. Insbesondere kann es sich um einen keramischen Festelektrolyten handeln. Dies umfasst auch das Rohmaterial eines Festelektrolyten und daher die Ausbildung als so genannter Grünling oder Braunling, der erst nach einem Sintern zu einem Festelektrolyten wird. Insbesondere kann der Festelektrolyt als Festelektrolytschicht oder aus mehreren Festelektrolytschichten ausgebildet sein. Unter einer Schicht ist im Rahmen der vorliegenden Erfindung eine einheitliche Masse in flächenhafter Ausdehnung einer gewissen Höhe zu verstehen, die über, unter oder zwischen anderen Elementen liegt. Bei einem Festelektrolyten kann es sich insbesondere um einen keramischen Festelektrolyten handeln, beispielsweise um Zirkoniumdioxid, insbesondere Yttrium-stabilisiertes Zirkoniumdioxid (YSZ) und/oder Scandium-dotiertes Zirkoniumdioxid (ScSZ). Der Festelektrolyt kann vorzugsweise gasundurchlässig sein und/oder kann einen ionischen Transport, beispielsweise einen ionischen Sauerstofftransport, gewährleisten. Insbesondere kann es sich bei der ersten und der zweiten Elektrode um einen elektrisch leitfähigen Bereich handeln, beispielsweise eine elektrisch leitfähige metallische Beschichtung, welcher auf den mindestens einen Festelektrolyten aufgebracht werden kann und/oder in anderer Weise den Festelektrolyten kontaktieren kann. Insbesondere kann durch Anlegen einer Spannung, insbesondere einer Pumpspannung, an die erste und die zweiten Elektrode Sauerstoff aus dem Gas in den Messhohlraum hinein- oder herausgepumpt werden.

Das Sensorelement kann weitere Elektroden aufweisen, beispielsweise eine dritte und eine vierte Elektrode. Das Sensorelement kann mindestens eine Nernstzelle aufweisen, welche die mindestens eine dritte Elektrode und die mindestens eine vierte Elektrode aufweist, welche mit dem Festelektrolyten verbunden sind. Auch Ausführungsformen, in welchen die dritte Elektrode eingerichtet ist als Pumpelektrode und das Sensorelement keine vierte Elektrode aufweist, sind denkbar.

Die dritte Elektrode kann als eine von dem Messgasraum getrennt ausgebildete Referenzelektrode ausgestaltet sein. Die dritte Elektrode kann zumindest teilweise mit einem Referenzgasraum verbunden sein, beispielsweise fluidisch und/oder über eine Gasverbindung. Unter einem Referenzgasraum kann ein Raum innerhalb des Sensorelements verstanden werden, welcher mit einem Umgebungsraum, beispielsweise einem Umgebungsraum um eine Brennkraftmaschine, verbunden ist. Insbesondere kann in dem Umgebungsraum Luft sein. Der Referenzgasraum kann insbesondere über den Festelektrolyten mit dem Messhohlraum verbunden sein. Die vierte Elektrode kann als eine Nernst-Elektrode ausgestaltet sein, welche in dem Messhohlraum angeordnet sein kann.

Unter einem elektronischen Steuergerät kann dabei allgemein eine elektronische Vorrichtung verstanden sein, welche eingerichtet ist, um den Sensor zu betreiben und zu steuern. Beispielsweise können eine oder mehrere elektronische Verbindungen zwischen dem Sensor und dem elektronischen Steuergerät vorgesehen sein. Das elektronische Steuergerät kann beispielsweise mindestens eine Datenverarbeitungsvorrichtung umfassen, beispielsweise mindestens einen Computer oder Mikrocontroller. Das elektronische Steuergerät kann mindestens einen integrierten Schaltkreis aufweisen, insbesondere eine anwendungsspezifische integrierte Schaltung (ASIC). Die Datenverarbeitungsvorrichtung kann einen oder mehrere flüchtige und/oder nicht-flüchtige Datenspeicher aufweisen, wobei die Datenverarbeitungsvorrichtung beispielsweise programmtechnisch eingerichtet sein kann, um den Sensor anzusteuern. Das elektronische Steuergerät kann weiterhin mindestens eine Schnittstelle umfassen, beispielsweise eine elektronische Schnittstelle und/oder eine Mensch-Maschine-Schnittstelle wie beispielsweise eine Eingabe-/Ausgabe-Vorrichtung wie ein Display und/oder eine Tastatur. Das elektronische Steuergerät kann beispielsweise zentral oder auch dezentral aufgebaut sein. Auch andere Ausgestaltungen sind denkbar.

Das Sensorelement kann ein Heizelement aufweisen. Unter einem Heizelement ist im Rahmen der vorliegenden Erfindung ein Element zu verstehen, das zum Erwärmen des Festelektrolyten und der Elektroden auf mindestens ihre Funktionstemperatur und vorzugsweise auf ihre Betriebstemperatur dient. Die Funktionstemperatur ist diejenige Temperatur, ab der der Festelektrolyt für Ionen leitend wird und die ungefähr 350 °C beträgt. Davon ist die Betriebstemperatur zu unterscheiden, die diejenige Temperatur ist, bei der das Sensorelement üblicherweise betrieben wird und die höher ist als die Funktionstemperatur. Die Betriebstemperatur kann beispielsweise von 700 °C bis 950 °C sein. Das Heizelement kann einen Heizbereich und mindestens eine Zuleitungsbahn umfassen. Unter einem Heizbereich ist im Rahmen der vorliegenden Erfindung der Bereich des Heizelements zu verstehen, der in dem Schichtaufbau entlang einer zu der Oberfläche des Sensorelements senkrechten Richtung mit einer Elektrode überlappt. Üblicherweise erwärmt sich der Heizbereich während des Betriebs stärker als die Zuleitungsbahn, so dass diese unterscheidbar sind. Die unterschiedliche Erwärmung kann beispielsweise dadurch realisiert werden, dass der Heizbereich einen höheren elektrischen Widerstand aufweist als die Zuleitungsbahn. Der Heizbereich und/oder die Zuleitung sind beispielsweise als elektrische Widerstandsbahn ausgebildet und erwärmen sich durch Anlegen einer elektrischen Spannung. Das Heizelement kann beispielsweise aus Platin-Cermet hergestellt sein. Unter einem Betriebszustand kann ein Zustand des Sensors verstanden werden, in welchem die Betriebstemperatur erreicht ist und nach Strom- oder Spannungsänderungen am Sensorelement ein elektrisch stabiler Zustand erreicht ist. In dem Betriebszustand wird ein im Wesentlichen konstanter Spannungszustand an der Nernstzelle eingestellt. In einer Aufheizphase des Sensors kann eine Spannung zwischen den Elektroden des Sensorelements ein Einschwingverhalten zeigen. Unter einem "im Wesentlich konstanten Spannungszustand" kann verstanden werden, dass die Spannung zwischen den Elektroden einen statischen Wert erreicht, wobei Abweichungen von weniger als 10%, bevorzugt weniger als 5%, besonders bevorzugt von weniger als 1% von einem statischen Wert möglich sind. In dem Betriebszustand kann ein konstanter Strom am Sensorelement anliegen, ebenso kann ein Offsetspannungswert zwischen den Elektroden des Sensorelements ungleich Null anliegen.

Unter einer Diagnosesequenz kann eine Abfolge von Diagnosezuständen verstanden werden. Unter einem Diagnosezustand kann ein Schaltzustand verstanden werden. In dem ersten Diagnosezustand wird das Sensorelement mit einem Diagnosestrom beaufschlagt. Unter Beaufschlagen des Sensorelements mit einem Diagnosestrom kann verstanden werden, dass ein vorgegebener oder vorgebbarer Strom über die Elektroden an das Sensorelement angelegt wird, insbesondere mittels einer Stromquelle. Die Stromquelle kann Bestandteil des Steuergeräts sein oder separat von dem Steuergerät ausgestaltet sein.

Der Sensor zweigt bei der Beaufschlagung mit dem Diagnosestrom ein Einschwingverhalten, insbesondere ein exponentielles Einschwingverhalten. Ein exponentieller Einschwingvorgang in dem ersten Diagnosezustand auf einen Zielwert bei Bestromung mit dem Strom I kann

$$U(t) = U(t_0) + \left(U_{Offset} + R_{innen} \cdot I - U(t_0)\right)\left(1 - exp(-(t - t_0)/\tau)\right),$$

erfüllen, wobei $U_{offset}$ der Offsetspannungswert zwischen den Elektroden im Betriebszustand ist, wobei $R_{innen}$ der Innenwiderstand des Sensorelements ist, wobei $t_0$ ein Zeitpunkt des Einschaltens der Stromquelle ist, wobei $\tau$ eine Zeitkonstante einer Ladezeit einer wirksamen differentiellen Gesamtkapazität $C_{Diff}$ des Steuergeräts ist. Insbesondere ist $\tau = R_{innen} \cdot C_{Diff}$.

In dem zweiten Diagnosezustand wird der Diagnosestrom abgeschaltet. Insbesondere ist das Sensorelement bezüglich des Diagnosestroms unbestromt. Insbesondere kann in dem zweiten Diagnosezustand die Stromquelle abgeschaltet werden.

Das Sensorelement zeigt beim Abschalten ein Abklingverhalten, insbesondere ein exponentielles Abklingverhalten. Ein exponentieller Abklingvorgang in dem zweiten Diagnosezustand mit identischer Zeitkonstante, wie in dem Einschwingvorgang, kann

$$U(t) = U(t_0) + \left(U_{Offset} - U(t_0)\right)\left(1 - exp(-(t - t_0)/\tau)\right),$$

erfüllen, wobei $t_0$ ist diesem Fall ein Zeitpunkt des Abschaltens der Stromquelle ist.

In dem Verfahren kann eine Vielzahl von Diagnosesequenzen durchgeführt werden. Insbesondere können wiederholt nacheinander und abwechselnd der erste Diagnosezustand und der zweite Diagnosezustand eingestellt werden, beispielsweise periodisch. Die Vielzahl kann zwei, drei, vier oder mehr Diagnosesequenzen umfassen. Eine Anzahl der Wiederholungen, im Folgenden auch als Iterationen bezeichnet, kann von einer angestrebten oder vorgegebenen Genauigkeit der Bestimmung des Innenwiderstands abhängen. Eine Zeitdauer des ersten Diagnosezustands und eine Zeitdauer des zweiten Diagnosezustands kann gleich lang sein. Alternativ kann die Zeitdauer des ersten Diagnosezustands und die Zeitdauer des zweiten Diagnosezustands verschieden sein.

In dem ersten Diagnosezustand wird der mindestens eine erste Spannungswert erfasst, und in dem zweiten Diagnosezustand wird der mindestens eine zweite Spannungswert erfasst. Unter einer Erfassung eines Spannungswerts kann eine Messung und/oder Bestimmung des Spannungswertes zwischen den Elektroden des Sensorelements verstanden werden. Der erste Spannungsmesswert kann während des Einschwingvorgangs bestimmt werden. Der zweite Spannungsmesswert kann während des Abklingvorgangs bestimmt werden. Die Erfassung des ersten Spannungsmesswertes kann in jeder der Diagnosesequenzen zu einem identischen Zeitpunkt innerhalb des Einschwingvorgangs erfolgen. Die Erfassung des zweiten Spannungsmesswertes kann in jeder der Diagnosesequenzen zu einem identischen Zeitpunkt innerhalb des Abklingvorgangs erfolgen.

Unter einer Information über die Temperatur kann eine Bestimmung eines Innenwiderstands des Sensorelements verstanden werden. Der Innenwiderstand kann ein Maß für die Temperatur des Sensorelements sein. Insbesondere kann aus dem Innenwiderstand die Temperatur des Sensorelements über einen vorgegebenen oder vorbestimmbaren Zusammenhang bestimmt werden. In Verfahrensschritt c) kann der Innenwiderstand $R_{innen}$ des Sensorelements bestimmt werden aus dem Zusammenhang:

$$R_{innen}[i] = (abs(U[i] + U[i-1]) + 2 \cdot \Delta U_{Mess}[i])/I,$$

wobei I der Diagnosestrom an dem Sensorelement ist. Ein Einschwingfehler $\Delta U_{Mess}[i]$ kann nach einigen Wiederholungsmessungen beim Auf- und beim Entladevorgang gleich groß sein. Beim Abklingvorgang kann der Einschwingfehler im Vergleich zu dem Offsetspannungswert bestimmt werden und bei der Bestimmung des Innenwiderstands berücksichtigt werden.

In Verfahrensschritt c) wird erfindungsgemäß der Innenwiderstand $R_{innen}$ des Sensorelements bestimmt aus dem Zusammenhang:

$$R_{innen}[i] = (U[i] + U[i-1] - 2U_{Offset})/I,$$

wobei I der angelegte Diagnosestrom, i eine Iterationsstufe, $U[i]$ ein Spannungsmesswert der i-ten Iterationsstufe, $U[i-1]$ ein Spannungsmesswert der (i-1)-ten Iterationsstufe und $U_{offset}$ der Offsetspannungswert im Betriebszustand ist. Erfindungsgemäß sind $U[i]$ und $U[i-1]$ der erste Spannungswert und der zweite Spannungswert.

In dem Verfahren kann weiter eine Differenzkapazität, insbesondere die wirksame differentielle Gesamtkapazität, $C_{Diff}$ mindestens einer differentiellen Kapazität des elektronischen Steuergeräts bestimmt werden aus dem Zusammenhang:

$$C_{Diff}[i] = \tau[i]/R_{innen}[i],$$

mit

$$\tau(i) = -\frac{t_{Mess}}{log\left(1 - \frac{(U[i] - U_{Offset})}{R_{innen}[i]} \cdot I\right)},$$

wobei $\tau$ eine Zeitkonstante der Ladezeit der wirksamen differentiellen Gesamtkapazität, i eine Iterationsstufe, $U[i]$ ein Spannungsmesswert der i-ten Iterationsstufe, $U_{offset}$ der Offsetspannungswert, $t_{Mess}$ ein Zeitpunkt der Messung nach einem Einschalten oder Abschalten der Bestromung und $R_{innen}$ der Innenwiderstand ist. Die bestimmte differentielle Gesamtkapazität kann zu einer weiteren Auslegung der zeitlichen Bestromung und/oder zu weiteren Diagnosezwecken verwendet werden.

Das Verfahren kann einen Ausgabeschritt umfassen, bei welchem die Information über die Temperatur und/oder der Wert der differentiell wirksamen Kapazitäten ausgegeben wird. Alternativ oder zusätzlich kann das Ergebnis in dem Steuergerät hinterlegt werden.

Nach Erreichung des im Wesentlichen konstanten Spannungszustands kann durch abwechselndes Anlegen gleichlanger bestromter und unbestromter Diagnosezustände und fest definierten Messungen in jeder Phase, trotz einer Spannungs-Messung in einem nicht-eingeschwungenen Zustand, ein Innenwiderstand durch den oben beschriebenen Zusammenhang bestimmt werden, bei welchem sich systematische Fehler durch die zusätzlichen differentiellen Kapazitäten aufheben. Insbesondere kann der Einfluss der differentiellen Kapazitäten auf die Bestimmung des Innenwiderstands bereits durch Bestimmung des Offsetspannungswertes im Betriebszustand und anschließende einmalige Durchführung der Diagnosesequenz reduziert werden.

In einem weiteren Aspekt wird ein Computerprogramm vorgeschlagen, welches eingerichtet ist, jeden Schritt des erfindungsgemäßen Verfahrens durchzuführen. Weiterhin wird ein elektronisches Speichermedium vorgeschlagen, auf welchem ein Computerprogramm zur Durchführung des erfindungsgemäßen Verfahrens gespeichert ist. In einem weiteren Aspekt wird ein elektronisches Steuergerät vorgeschlagen, welches das erfindungsgemäße elektronische Speichermedium mit dem besagten Computerprogramm zur Durchführung des erfindungsgemäßen Verfahrens umfasst. Hinsichtlich der Definitionen und Ausführungsformen wird auf die Beschreibung des erfindungsgemäßen Verfahrens verwiesen.

In einem weiteren Aspekt wird ein Sensor zur Erfassung mindestens einer Eigenschaft eines Messgases in einem Messgasraum, insbesondere zur Erfassung eines Anteils einer Gaskomponente in dem Messgas vorgeschlagen. Der Sensor weist ein Sensorelement zur Erfassung der Eigenschaft des Messgases auf. Das Sensorelement weist mindestens ein Sensorelement auf. Das Sensorelement umfasst mindestens eine erste Elektrode, mindestens eine zweite Elektrode und mindestens einen die erste Elektrode und die zweite Elektrode verbindenden Festelektrolyten. Das Sensorelement kann mindestens eine Pumpzelle aufweisen. Das Sensorelement kann weiter mindestens eine Nernstzelle aufweisen. Die Nernstzelle kann mindestens eine dritte Elektrode und mindestens eine vierte Elektrode, welche mit dem Festelektrolyten verbunden sind, umfassen. Der Sensor weist weiterhin ein elektronisches Steuergerät mit dem erfindungsgemäßen Computerprogramm zur Durchführung des erfindungsgemäßen Verfahrens auf. Hinsichtlich der Definitionen und Ausführungsformen wird auf die Beschreibung des erfindungsgemäßen Verfahrens verwiesen.

Die vorgeschlagenen Verfahren und Vorrichtungen sind vorteilhaft gegenüber bekannten Verfahren und Vorrichtungen. Das Verfahren kann den Einfluss der auf dem Steuergerät verbauten differentiellen oder differentiell wirksamen Kapazitäten, sowie den Einfluss der Aufpolarisierung der Sondenelektrode auf eine ohmsche Messung reduzieren, insbesondere unter Verringerung einer mittleren Spannungsbelastung. Störglieder, insbesondere die auf dem Steuergerät verbauten differentiellen oder differentiell wirksamen Kapazitäten, können sich durch abwechselnd Auf- und Depolarisation teilweise aufheben, und die Spannungsbelastung kann an der Messzelle gerade bei hohen Zielwiderständen auf fast die Hälfte im Vergleich zu bekannten Verfahren abgesenkt werden. Das Verfahren kann eine robustere Widerstandsmessung ermöglichen. Das Verfahren kann Alterungseffekte verringern und durch die robustere Widerstandsmessung deren negative Auswirkungen reduzieren. Prinzipiell kann das Verfahren für jegliche Steuereinheiten eingesetzt werden, welche mittels einer Stromquelle einen ohmschen Widerstand bestimmen, deren Messung jedoch durch Differenzkapazitäten und/oder Aufpolarisierungen verfälscht ist.

Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:

Figur 1            ein Ausführungsbeispiel eines erfindungsgemäßen Sensors;

Figuren 2A bis D   Schaltbilder eines erfindungsgemäßen Sensors,

Figur 3            einen zeitlichen Verlauf der Spannung zwischen Elektroden eines Sensorelements und einen zeitlichen Verlauf eines Diagnosestroms,

Figur 4            einen relativen Innenwiderstand in Abhängigkeit eines Iterationsschritts,

Figur 5            einen Vergleich eines zeitlichen Verlaufs bis zur Kenntnis einer Einschwingzeit eines dauerhaft bestromten Sensorelements und einer erfindungsgemäßen Bestromung; und

Figur 6            eine relative differentielle Kapazität in Abhängigkeit des Iterationsschritts.

Ausführungsformen der Erfindung

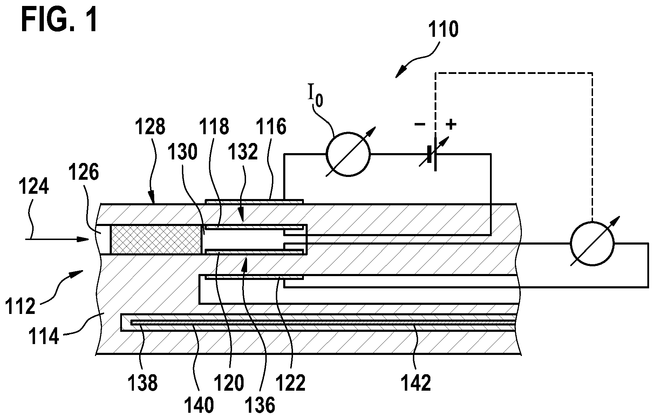

Figur 1 zeigt einen prinzipiellen Aufbau eines erfindungsgemäßen Sensors 110. Der in Figur 1 dargestellte Sensor 110 kann zum Nachweis von physikalischen und/oder chemischen Eigenschaften eines Messgases in einem Messgasraum verwendet werden, wobei eine oder mehrere Eigenschaften erfasst werden können. Die Erfindung wird im Folgenden insbesondere unter Bezugnahme auf eine qualitative und/oder quantitative Erfassung einer Gaskomponente des Messgases beschrieben, insbesondere unter Bezugnahme auf eine Erfassung eines Sauerstoffanteils in dem Messgas. Der Sauerstoffanteil kann beispielsweise in Form eines Partialdrucks und/oder in Form eines Prozentsatzes erfasst werden. Grundsätzlich sind jedoch auch andere Arten von Gaskomponenten erfassbar, wie beispielsweise Stickoxide, Kohlenwasserstoffe und/oder Wasserstoff. Alternativ oder zusätzlich sind jedoch auch andere Eigenschaften des Messgases erfassbar. Die Erfindung ist insbesondere im Bereich der Kraftfahrzeugtechnik einsetzbar, so dass es sich bei dem Messgasraum insbesondere um einen Abgastrakt einer Brennkraftmaschine handeln kann, bei dem Messgas insbesondere um ein Abgas.

Der Sensor 110 weist ein Sensorelement 112 auf. Das Sensorelement 112 kann als keramischer Schichtaufbau ausgebildet sein, wie nachstehend ausführlicher beschrieben wird. Das Sensorelement 112 weist einen Festelektrolyten 114, eine erste Elektrode 116 und eine zweite Elektrode 118. Das Sensorelement kann eine dritte Elektrode 120 und eine vierte Elektrode 122 aufweisen. Der Festelektrolyt 114 kann aus mehreren keramischen Schichten in Form von Festelektrolytschichten zusammengesetzt sein oder mehrere Festelektrolytschichten umfassen. Beispielsweise umfasst der Festelektrolyt 114 eine Pumpfolie oder Pumpschicht, eine Zwischenfolie oder Zwischenschicht und eine Heizfolie bzw. Heizschicht, die übereinander bzw. untereinander angeordnet sind. Das Sensorelement 110 kann einen Gaszutrittsweg 124 aufweisen. Der Gaszutrittsweg 124 kann ein Gaszutrittsloch 126 aufweisen, das sich von einer Oberfläche 128 des Festelektrolyten 114 ins Innere des Schichtaufbaus des Sensorelements 114 erstreckt.

Die erste Elektrode 116 kann auf der Oberfläche 128 des Festelektrolyten 114 angeordnet sein. Die erste Elektrode 116 kann mit Gas aus dem Messgasraum beaufschlagbar sein. Insbesondere kann die erste Elektrode 116 zumindest teilweise mit dem Messgasraum verbunden sein, beispielsweise kann die erste Elektrode direkt dem Gas des Messgasraums ausgesetzt sein und/oder durch eine gasdurchlässige poröse Schutzschicht mit Gas aus dem Messgasraum beaufschlagbar sein. Beispielsweise kann die erste Elektrode 116 als eine äußere Pumpelektrode ausgestaltet sein.

Die zweite Elektrode 118 kann in mindestens einem Messhohlraum 130 angeordnet sein. Beispielsweise kann die zweite Elektrode 118 als eine innere Pumpelektrode ausgestaltet sein. Der Messhohlraum 130 kann ganz oder teilweise offen ausgestaltet sein. Weiter kann der Messhohlraum 130 ganz oder teilweise gefüllt sein, beispielsweise mit einem porösen Medium, beispielsweise mit porösem Aluminiumoxid. Der Messhohlraum 130 kann über mindestens eine Diffusionsbarriere mit Gas aus dem Messgasraum beaufschlagbar sein.

Die erste Elektrode 116 und die zweite Elektrode 118 sind über den mindestens einen Festelektrolyten 114 verbunden und können eine Pumpzelle 132 bilden. Durch Anlegen einer Spannung, insbesondere einer Pumpspannung, an die erste Elektrode 116 und die zweite Elektrode118 kann Sauerstoff durch die Diffusionsbarriere hindurch aus dem Gas in den Messhohlraum 130 hinein- oder herausgepumpt werden.

Die dritte Elektrode 120 kann als eine von dem Messgasraum getrennt ausgebildete Referenzelektrode ausgestaltet sein. Die dritte Elektrode 120 kann zumindest teilweise mit einem, hier nicht gezeigten, Referenzgasraum 134 verbunden sein, beispielsweise fluidisch und/oder über eine Gasverbindung. Der Referenzgasraum 134 kann insbesondere über den Festelektrolyten 114 mit dem Messhohlraum 130 verbunden sein. Die vierte Elektrode 122 kann als eine Nernst-Elektrode ausgestaltet sein, welche in dem Messhohlraum 130 angeordnet sein kann. Die dritte Elektrode 120 und die vierte Elektrode 122 können über den mindestens einen Festelektrolyten 114 verbunden sein und eine Nernstzelle 136 bilden.

Mittels der Pumpzelle 132 kann beispielsweise ein Pumpstrom durch die Pumpzelle 132 derart eingestellt werden, dass in dem Messhohlraum 130 die Bedingung $\lambda$ (Lambda) = 1 oder eine andere bekannte Zusammensetzung herrscht. Diese Zusammensetzung wird wiederum von der Nernstzelle 136 erfasst, indem eine Nernstspannung $V_N$ zwischen der dritten Elektrode 120 und der vierten Elektrode 122 gemessen wird. Da in dem Referenzgasraum 134 eine bekannte Gaszusammensetzung vorliegt bzw. diese einem Sauerstoffüberschuss ausgesetzt ist, kann anhand der gemessenen Spannung auf die Zusammensetzung in dem Messhohlraum 130 geschlossen werden.

In der Verlängerung der Erstreckungsrichtung des Gaszutrittslochs 126 kann ein Heizelement 138 in dem Schichtaufbau des Sensorelements 112 angeordnet sein. Das Heizelement 138 weist einen Heizbereich 140 und elektrische Zuleitungsbahnen 142 auf. Der Heizbereich 140 ist beispielsweise mäanderförmig ausgebildet.

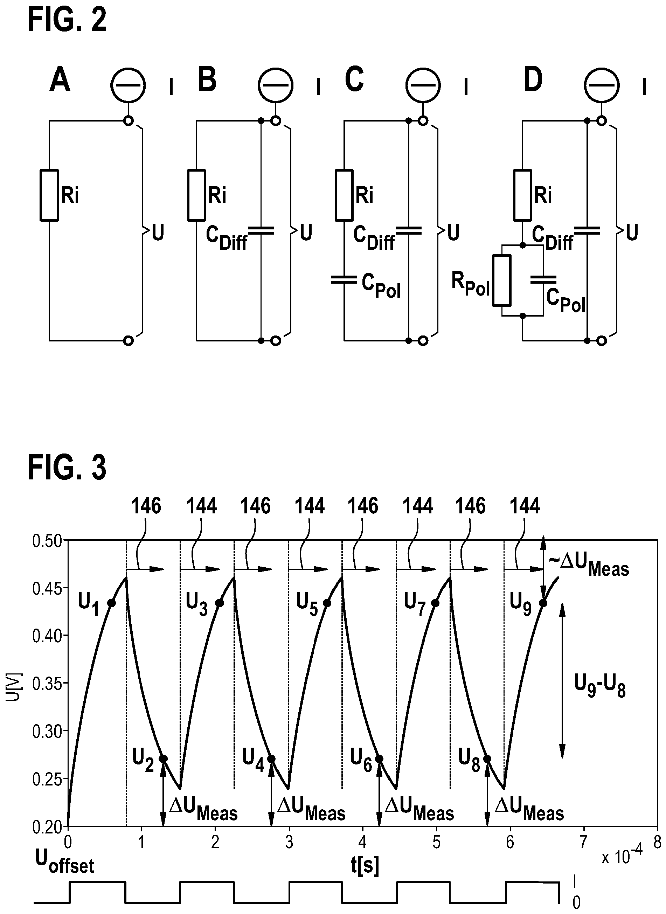

Figuren 2A bis 2D zeigen Schaltbilder des erfindungsgemäßen Sensorelements 136 (in diesem Fall die Nernstzelle). Figur 2A zeigt eine Idealschaltung ohne im Steuergerät verbaute differentielle oder differentiell wirkende Kapazitäten. Figuren 2B bis 2C zeigen weitere Schaltungskomponenten $C_{Diff}$ und $C_{Pol}$, beispielsweise parallel zu einen Polarisationswiderstand $R_{Pol}$.

Figur 3 zeigt einen zeitlichen Verlauf einer Ausführungsform des erfindungsgemäßen Verfahrens. Nach einem Einstellen eines Betriebszustandes, gekennzeichnet durch den Spannungswert $U_{offset}$ in Figur 3, wird mindestens eine Diagnosesequenz durchgeführt, in welcher mindestens ein erster Diagnosezustand 144 durch Beaufschlagen des Sensorelements 112, beispielsweise der Nernstzelle 136, mit einem Diagnosestrom eingestellt wird und mindestens ein zweiter Diagnosezustand 146 eingestellt wird, in welchem der Diagnosestrom abgeschaltet wird, so dass und die Nernstzelle bezüglich des Diagnosestroms unbestromt ist. Der untere Teil von Figur 3 zeigt einen zeitlichen Verlauf des Diagnosestroms, insbesondere ist ein Zu- und Abschalten des Diagnosestroms gezeigt. Der Diagnosestrom kann durch Ein- oder Abschalten einer Stromquelle zu- und abgeschaltet werden. Weiter zeigt Figur 3 einen zeitlichen Verlauf der Spannung zwischen Elektroden der Nernstzelle 136. In diesem Ausführungsbeispiel wird fünfmal ein erster Diagnosezustand 144 und viermal ein zweiter Diagnosezustand 146 eingestellt. In dem Verfahren kann eine Vielzahl von Diagnosesequenzen durchgeführt werden. Insbesondere können wiederholt nacheinander und abwechselnd der erste Diagnosezustand 144 und der zweite Diagnosezustand 146 eingestellt werden, beispielsweise periodisch. Die Vielzahl kann zwei, drei, vier oder mehr Diagnosesequenzen umfassen. Eine Anzahl der Wiederholungen kann von einer angestrebten oder vorgegebenen Genauigkeit der Bestimmung des Innenwiderstands abhängen. Eine Zeitdauer des ersten Diagnosezustands 144 und eine Zeitdauer des zweiten Diagnosezustands 146 kann gleich lang sein. Alternativ kann die Zeitdauer des ersten Diagnosezustands 144 und die Zeitdauer des zweiten Diagnosezustands 146 verschieden sein.

Der Sensor 110 kann bei der Beaufschlagung mit dem Diagnosestrom ein Einschwingverhalten zeigen, insbesondere ein exponentielles Einschwingverhalten. Ein exponentieller Einschwingvorgang in dem ersten Diagnosezustand 144 auf einen Zielwert bei Bestromung mit dem Strom I kann

$$U(t) = U(t_0) + \left(U_{Offset} + R_{innen} \cdot I - U(t_0)\right)\left(1 - exp(-(t - t_0)/\tau)\right),$$

erfüllen, wobei $U_{offset}$ der Offsetspannungswert zwischen den Nernstelektroden im Betriebszustand ist, wobei $R_{innen}$ der Innenwiderstand der Nernstzelle ist, wobei $t_0$ ein Zeitpunkt des Einschaltens der Stromquelle ist, wobei $\tau$ eine Zeitkonstante einer Ladezeit einer wirksamen differentiellen Gesamtkapazität $C_{Diff}$ des Steuergeräts ist. Insbesondere ist $\tau = R_{innen} \cdot C_{Diff}$.

In dem zweiten Diagnosezustand 146 ist die Nernstzelle 136 unbestromt. Insbesondere kann in dem zweiten Diagnosezustand 146 die Stromquelle abgeschaltet werden. Das Sensorelement 112 kann beim Abschalten ein elektrisches Abklingverhalten zeigen, insbesondere ein exponentielles Abklingverhalten. Ein exponentieller Abklingvorgang in dem zweiten Diagnosezustand mit identischer Zeitkonstante, wie in dem Einschwingvorgang, kann

$$U(t) = U(t_0) + \left(U_{Offset} - U(t_0)\right)\left(1 - exp(-(t - t_0)/\tau)\right),$$

erfüllen, wobei $t_0$ ist diesem Fall ein Zeitpunkt des Abschaltens der Stromquelle ist.

In dem ersten Diagnosezustand 144 wird mindestens ein erster Spannungswert erfasst und in dem zweiten Diagnosezustand 146 mindestens ein zweiter Spannungswert erfasst. Der erste Spannungsmesswert kann während des Einschwingvorgangs bestimmt werden, beispielsweise in Figur 3 mit $U_1$, $U_3$, $U_5$, $U_7$ und $U_9$ bezeichnet. Der zweite Spannungsmesswert kann während des Abklingvorgangs bestimmt werden, beispielsweise in Figur 3 mit $U_2$, $U_4$, $U_6$ und $U_8$ bezeichnet. Die Erfassung des ersten Spannungsmesswertes kann in jeder der Diagnosesequenzen zu einem identischen Zeitpunkt innerhalb des Einschwingvorgangs erfolgen. Die Erfassung des zweiten Spannungsmesswertes kann in jeder der Diagnosesequenzen zu einem identischen Zeitpunkt innerhalb des Abklingvorgangs erfolgen.

Aus dem ersten Spannungswert und dem zweiten Spannungswert wird eine Information über die Temperatur bestimmt. Der Innenwiderstand kann ein Maß für die Temperatur des Sensorelements 112 sein. Insbesondere kann aus dem Innenwiderstand die Temperatur des Sensorelements 112 über einen vorgegebenen oder vorbestimmbaren Zusammenhang bestimmt werden. In Verfahrensschritt c) kann der Innenwiderstand $R_{innen}$ des Sensorelement 112 bestimmt werden aus dem Zusammenhang:

$$R_{innen}[i] = (abs(U[i] + U[i - 1]) + 2 \cdot \Delta U_{Mess}[i])/I,$$

wobei I der Diagnosestrom an dem Sensorelement ist. Ein Einschwingfehler $\Delta U_{Mess}[i]$, in Figur 3 mit $\Delta U_{Meas}$ eingezeichnet, kann nach einigen Wiederholungsmessungen beim Auf- und beim Entladevorgang gleich groß sein. Beim Abklingvorgang kann der Einschwingfehler im Vergleich zu dem Offsetspannungswert bestimmt werden und bei der Bestimmung des Innenwiderstands berücksichtigt werden. In Verfahrensschritt c) kann der Innenwiderstand $R_{innen}$ der Nernstzelle bestimmt werden aus dem Zusammenhang:

$$R_{innen}[i] = (U[i] + U[i - 1] - 2U_{Offset})/I,$$

wobei I der angelegte Diagnosestrom, i eine Iterationsstufe, $U[i]$ ein Spannungsmesswert der i-ten Iterationsstufe, $U[i - 1]$ ein Spannungsmesswert der (i-1)-ten Iterationsstufe und $U_{offset}$ der Offsetspannungswert im Betriebszustand ist.

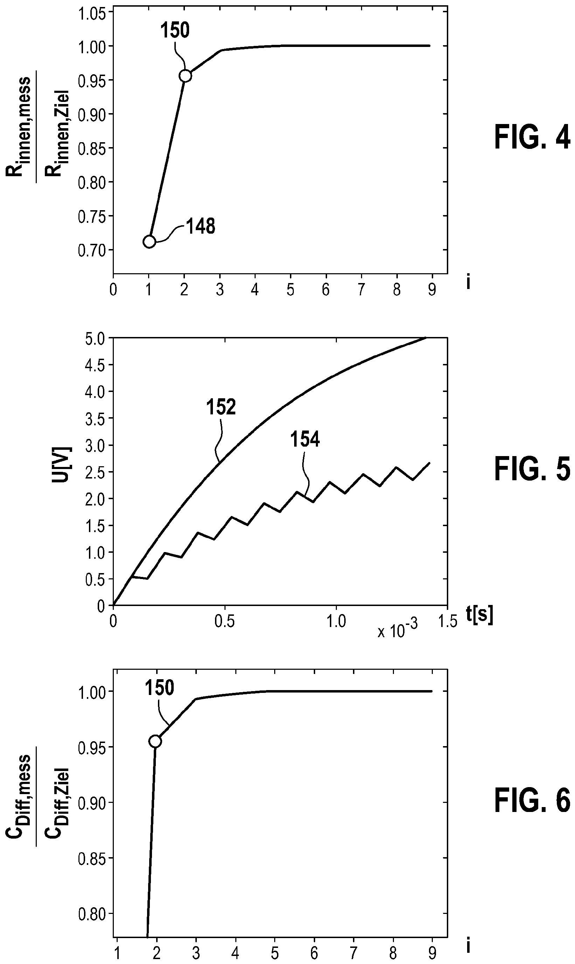

Figur 4 zeigt eine Abhängigkeit eines relativen Innenwiderstands, d.h. des mittels des erfindungsgemäßen Verfahrens bestimmten Innenwiderstands $R_{innen,mess}$ geteilt durch einen Ziel-Innenwiderstand $R_{innen,Ziel}$, in diesem Fall

1kΩ, in Abhängigkeit eines Iterationsschritts i. Abhängig von der Anzahl der abwechselnd angelegten Diagnosezustände kann eine Verbesserung der Bestimmung des Innenwiderstands erreicht werden. In Figur 4 sind zum Vergleich zwei Messpunkte eingezeichnet. In einem ersten Messpunkt 148 wurde der Innenwiderstand mit einer unbestromten und einer bestromten Messung bestimmt. In einem zweiten Messpunkt 150 wurde zunächst eine vollständig eingeschwungene unbestromte Messung, dann eine bestromte Messung und anschließend eine weitere unbestromte Messung zur Bestimmung des Innenwiderstands durchgeführt. Hier ist eine Verbesserung von 71% auf 96% gegenüber der Bestimmung mit nur einer unbestromten und einer bestromten Messung erreichbar. Eine weiter erhöhte Zahl von Bestromungen kann vor allem bei deutlich höheren Widerständen sinnvoll sein.

Eine Zeit, welche effektiv bis zur Kenntnis der Einschwingzeit des Systems benötigt wird, kann für ein dauerhaft bestromtes System und für ein abwechselnd bestromtes System gleich lang sein. Figur 5 zeigt einen Vergleich eines zeitlichen Verlaufs bis zur Kenntnis einer Einschwingzeit einer dauerhaft bestromten Nernstzelle (Kurve 152) und einer erfindungsgemäßen Bestromung (Kurve 154).

In dem Verfahren kann weiter eine Differenzkapazität, insbesondere die wirksame differentielle Gesamtkapazität, $C_{Diff}$ mindestens einer differentiellen Kapazität des elektronischen Steuergeräts bestimmt werden aus dem Zusammenhang:

$$C_{Diff}[i] = \tau[i]/R_{innen}[i],$$

mit

$$\tau(i) = -\frac{t_{Mess}}{\log\left(1 - \frac{(U[i] - U_{Offset})}{R_{innen}[i]} \cdot I\right)},$$

wobei τ eine Zeitkonstante der Ladezeit der wirksamen differentiellen Gesamtkapazität, i eine Iterationsstufe, $U[i]$ ein Spannungsmesswert der i-ten Iterationsstufe, $U_{offset}$ der Offsetspannungswert, $t_{Mess}$ ein Zeitpunkt der Messung nach einem Einschalten oder Abschalten der Bestromung und $R_{innen}$ der Innenwiderstand ist. Die bestimmte differentielle Gesamtkapazität kann zu einer weiteren Auslegung der zeitlichen Bestromung und/oder zu weiteren Diagnosezwecken verwendet werden.

Figur 6 zeigt eine Abhängigkeit einer relativen differentiellen Kapazität, d.h. des mittels der erfindungsgemäßen Verfahrens bestimmten differentiellen Kapazität $C_{Diff,mess}$ geteilt durch eine Ziel-Kapazität $C_{Diff,Ziel}$, in diesem Fall 40 ns, in Abhängigkeit eines Iterationsschritts i. Abhängig von der Anzahl der Abfolge von bestromten und unbestromten Messungen kann eine Verbesserung der Bestimmung der differentiellen Kapazität erreicht werden. Bereits mit dem zweiten Messpunkt 150 kann die Differenzkapazität auf 95% Genauigkeit bestimmt werden.

**Patentansprüche**

1. Verfahren zur Bestimmung eines Innenwiderstands eines Sensorelements (112) eines Sensors (110) zur Erfassung mindestens einer Eigenschaft eines Messgases in einem Messgasraum, wobei durch das Sensorelement (112) die Eigenschaft des Messgases erfassbar ist, wobei das Sensorelement (112) mindestens eine erste Elektrode (116), mindestens eine zweite Elektrode (118) und mindestens einen die erste Elektrode (116) und die zweite Elektrode (118) verbindenden Festelektrolyten (114) umfasst, wobei der Sensor (110) mindestens ein elektronisches Steuergerät aufweist, wobei das Verfahren die folgenden Schritte aufweist:

    d) Einstellen eines Betriebszustandes, wobei eine Heizspannung an das Sensorelement (112) angelegt wird, und wobei ein im Wesentlichen konstanter Spannungszustand an dem Sensorelement (112) eingestellt und erfasst wird;
    e) Durchführen mindestens einer Diagnosesequenz, wobei mindestens ein erster Diagnosezustand (144) durch Beaufschlagen des Sensorelements (112) mit einem Diagnosestrom eingestellt wird, wobei mindestens ein zweiter Diagnosezustand (146) eingestellt wird, in welchem der Diagnosestrom abgeschaltet wird, wobei in dem ersten Diagnosezustand (144) mindestens ein erster Spannungswert erfasst wird und in dem zweiten Diagnosezustand (146) mindestens ein zweiter Spannungswert erfasst wird und wobei der erste Spannungsmesswert während eines Einschwingvorgangs bestimmt wird, der aus der Beaufschlagen des Sensorelements (112) mit dem Diagnosestrom resultiert,
    **dadurch gekennzeichnet, dass**

der zweite Spannungsmesswert während eines Abklingvorgangs bestimmt wird, der aus dem Abschalten des Diagnosestroms resultiert;

f) Bestimmen des Innenwiderstands $R_{innen}$ des Sensorelements aus dem Zusammenhang $R_{innen}[i] = (U[i] + U[i - 1] - 2U_{Offset})/I$, wobei i eine Iterationsstufe ist, $U[i]$ und $U[i - 1]$ der erste Spannungswert und der zweite Spannungswert sind, das Sensorelement (112) mit einem Diagnosestrom I beaufschlagt wird, und $U_{offset}$ ein Spannungsoffset im Betriebszustand entsprechend dem konstanten Spannungszustand in dem Betriebszustand ist.

2. Verfahren nach dem vorhergehenden Anspruch, wobei eine Vielzahl von Diagnosesequenzen durchgeführt wird.

3. Verfahren nach einem der vorhergehenden Ansprüche, wobei eine Zeitdauer des ersten Diagnosezustands (144) und eine Zeitdauer des zweiten Diagnosezustands (146) gleich lang ist.

**Claims**

1. Method for determining an internal resistance of a sensor element (112) of a sensor (110) for detecting at least one property of a measurement gas in a measurement gas space, wherein the property of the measurement gas is detectable by the sensor element (112), wherein the sensor element (112) comprises at least one first electrode (116), at least one second electrode (118) and at least one solid electrolyte (114) connecting the first electrode (116) and the second electrode (118), wherein the sensor (110) has at least one electronic control unit, wherein the method has the following steps:

d) setting an operating state, wherein a heating voltage is applied to the sensor element (112), and wherein a substantially constant voltage state is set and detected at the sensor element (112);

e) carrying out at least one diagnosis sequence, wherein at least one first diagnosis state (144) is set by a diagnosis current being applied to the sensor element (112), wherein at least one second diagnosis state (146) is set in which the diagnosis current is switched off, wherein at least one first voltage value is detected in the first diagnosis state (144) and at least one second voltage value is detected in the second diagnosis state (146), and wherein the first voltage measurement value is determined during a settling process resulting from the diagnosis current being applied to the sensor element (112),

**characterized in that**

the second voltage measurement value is determined during a decay process resulting from the diagnosis current being switched off;

f) determining the internal resistance $R_{internal}$ of the sensor element from the relationship $R_{internal}[i] = (U[i] + U[i - 1] - 2U_{offset})/I$,

where i is an iteration step, $U[i]$ and $U[i - 1]$ are the first voltage value and the second voltage value, a diagnosis current I is applied to the sensor element (112), and $U_{offset}$ is a voltage offset in the operating state corresponding to the constant voltage state in the operating state.

2. Method according to the preceding claim, wherein a plurality of diagnosis sequences are carried out.

3. Method according to either of the preceding claims, wherein a time duration of the first diagnosis state (144) and a time duration of the second diagnosis state (146) have an identical length.

**Revendications**

1. Procédé de détermination d'une résistance interne d'un élément capteur (112) d'un capteur (110) destiné à acquérir au moins une propriété d'un gaz à mesurer dans un espace de gaz à mesurer, la propriété du gaz à mesurer pouvant être acquise par l'élément capteur (112), l'élément capteur (112) comportant au moins une première électrode (116), au moins une deuxième électrode (118) et au moins un électrolyte solide (114) qui relie la première électrode (116) et la deuxième électrode (118), le capteur (110) possédant au moins un contrôleur électronique, le procédé comprenant les étapes suivantes :

d) réglage d'un état en fonctionnement, une tension de chauffage étant appliquée à l'élément capteur (112) et un état de tension sensiblement constant étant réglé et acquis au niveau de l'élément capteur (112) ;

e) réalisation d'au moins une séquence de diagnostic, au moins un premier état de diagnostic (144) étant réglé en soumettant l'élément capteur (112) à un courant de diagnostic, au moins un deuxième état de diagnostic (146) étant réglé, dans lequel le courant de diagnostic est coupé, au moins une première valeur de tension étant acquise dans le premier état de diagnostic (144) et au moins une deuxième valeur de tension étant acquise dans le deuxième état de diagnostic (146) et la première valeur mesurée de tension étant déterminée pendant un état transitoire qui résulte de la soumission de l'élément capteur (112) au courant de diagnostic, **caractérisé en ce que** la deuxième valeur mesurée de tension est déterminée pendant un état de décroissance qui résulte de la coupure du courant de diagnostic ;

f) détermination de la résistance interne $R_{innen}$ de l'élément capteur à partir de la relation $R_{innen}[i] = (U[i] + U[i-1] - 2U_{offset})/I$,

i étant un niveau d'itération, $U[i]$ et $U[i-1]$ étant la première valeur de tension et la deuxième valeur de tension, l'élément capteur (112) étant soumis à un courant de diagnostic $I$ et $U_{offset}$ désignant un décalage de tension dans l'état en fonctionnement correspondant à l'état de tension constant dans l'état en fonctionnement.

2. Procédé selon la revendication précédente, une pluralité de séquences de diagnostic étant réalisées.

3. Procédé selon l'une des revendications précédentes, une durée du premier état de diagnostic (144) et une durée du deuxième état de diagnostic (146) étant de même longueur.

# FIG. 1

# FIG. 2

A, B, C, D

# FIG. 3

FIG. 4

FIG. 5

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014205383 A1

**In der Beschreibung aufgeführte Nicht-Patentliteratur**

- **K. REIF ; DEITSCHE, K-H. et al.** Kraftfahrtechnisches Taschenbuch. Springer Vieweg, 2014, 1338-1347